# FASCICULE DE BREVET EUROPEEN

(11) **EP 2 488 765 B1**
(45) Date de publication et mention de la délivrance du brevet: **09.03.2016**
(21) Numéro de dépôt: 10781965.8
(22) Date de dépôt: 11.10.2010
(51) Int. Cl.: F16B 5/06

(54) **DISPOSITIF DE FIXATION D'UNE TOILE INCORPORANT UN SYSTEME DE COMPENSATION DE LA DEFORMATION DIMENSIONNELLE DE LADITE TOILE**
VORRICHTUNG ZUR BEFESTIGUNG EINER FOLIE MIT EINEM SYSTEM ZUM AUSGLEICH DREIDIMENSIONALER VERFORMUNGEN DIESER FOLIE
DEVICE FOR ATTACHING A SHEET INCORPORATING A SYSTEM THAT COMPENSATES FOR THE DIMENSIONAL DEFORMATION OF SAID SHEET

(30) Priorité: 13.10.2009 FR 0957143
(43) Date de publication de la demande: 22.08.2012
(73) Titulaire: Lapouge, Stéphane, 1303 Penthaz (CH)
(72) Inventeur: Lapouge, Stéphane, 1303 Penthaz (CH)
(86) Numéro de dépôt international: PCT/FR2010/052136
(87) Numéro de publication internationale: WO 2011/045510

(56) Documents cités:
- DE-C1- 3 732 836
- FR-A1- 2 537 109
- JP-A- 7 139 230

## Description

La présente invention se rapporte à un dispositif de fixation d'une toile incorporant un système de compensation d'une éventuelle déformation dimensionnelle de ladite toile.

Il existe de nombreux dispositifs pour fixer une toile tendue. Ils comprennent généralement un châssis de forme polygonale, constitué de tronçons rectilignes comportant chacun une rainure dans laquelle est susceptible de s'immobiliser un insert, la toile étant maintenue coincée entre le châssis et l'insert. L'insert est réalisé en matière plastique, à base d'un alliage d'aluminium ou en un matériau composite pour avoir les caractéristiques élastiques requises pour son insertion. Un tel dispositif est notamment décrit dans le brevet EP-1.809.913 au nom du demandeur. Ce document décrit un insert avec un profilé particulier assurant un maintien efficace de la toile sur son support. De plus, ce type d'insert permet de tendre la toile grâce à un phénomène de basculement lors de sa mise en place. Selon une application, les dispositifs peuvent être utilisés pour tendre une toile perforée ou pleine, en matière plastique (Polychlorure de vinyle PVC, polytétrafluoroéthylène PTFE, éthylène tétrafluoroéthylène ETFE ou autre) destinée à limiter la pénétration du son, de la chaleur, de la lumière dans un lieu. Selon une technique décrite dans le document WO2003/100286, on peut disposer en périphérie de la toile une bande élastique reliée au cadre support pour garantir la tension de la toile dans le temps. Toutefois, comme précédemment, cette solution tend à augmenter significativement le coût de la toile.

Selon une autre solution technique décrite dans le document WO2006/063991, on peut prévoir au niveau du cadre support un tendeur sous forme d'un vérin qui tend à déformer le cadre en écartant les angles du cadre. Toutefois, cette solution est relativement complexe car elle nécessite des raccords au niveau des angles assurant une liaison coulissante entre les raccords d'angle et les côtés du cadre. De plus, cette solution ne peut convenir qu'à des cadres de dimensions restreintes pour ne pas générer des phénomènes de flambage au niveau des bras intercalés entre le tendeur et les raccords d'angle. Enfin, comme précédemment, cette solution conduit à augmenter sensiblement les coûts du support.

Le document FR-2.573.109 décrit un système pour tendre une toile avec les caractéristiques du préambule de la revendication 1, consistant à prévoir un boudin gonflable. Ce système est relativement complexe et coûteux et n'est pas optimal pour la tension de la toile.

Aussi, la présente invention vise à pallier les inconvénients de l'art antérieur en proposant un dispositif de fixation d'une toile permettant de compenser une éventuelle déformation dimensionnelle de la toile, de conception simple et n'augmentant pas de manière significative le coût du support.

A cet effet, l'invention a pour objet un dispositif de fixation d'une toile tendue comprenant les caractéristiques de la revendication 1.

D'autres caractéristiques et avantages ressortiront de la description qui va suivre de l'invention, description donnée à titre d'exemple uniquement, en regard des dessins annexés sur lesquels :

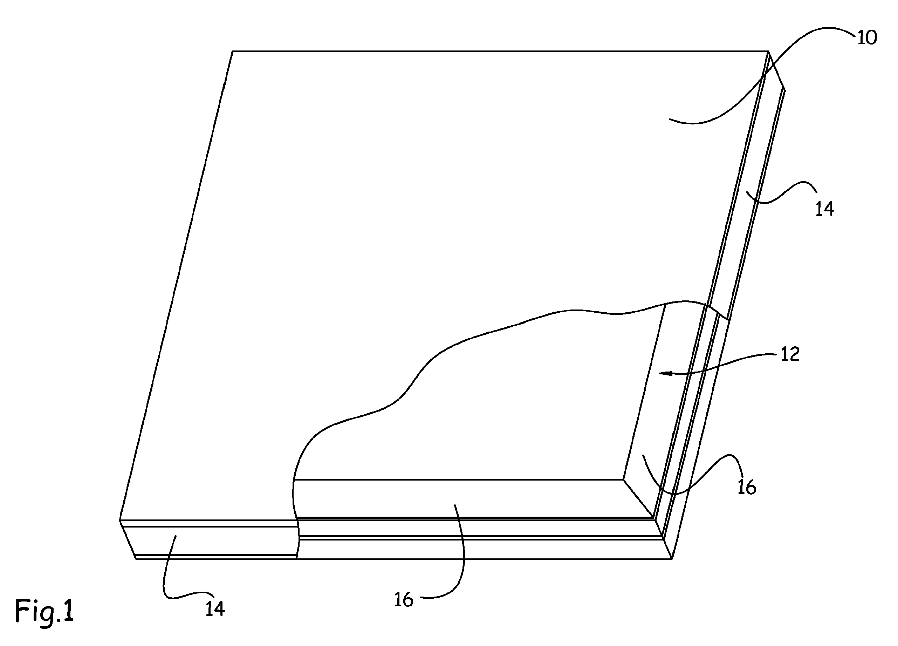

la figure 1 est une vue en perspective d'un support avec une toile tendue,

- la figure 2 est une coupe transversale d'un profilé selon l'invention utilisé pour former un cadre supportant une toile, ledit profilé permettant de compenser une éventuelle déformation dimensionnelle de la toile,
- la figure 3 est une coupe transversale du profilé de la figure 2 lors de la tension de la toile,
- la figure 4 est une vue en perspective d'un profilé selon l'invention, et
- la figure 5 est une coupe illustrant en détail les moyens de rappel.

Le dispositif de fixation d'une toile 10 comprend un châssis 12 de forme polygonale susceptible de recevoir au moins un insert 14, la toile 10 étant maintenue coincée entre le châssis 12 et l'insert 14.

La toile 10 peut avoir différentes formes et natures. Elle n'est pas plus détaillée car elle est à la portée de l'homme du métier.

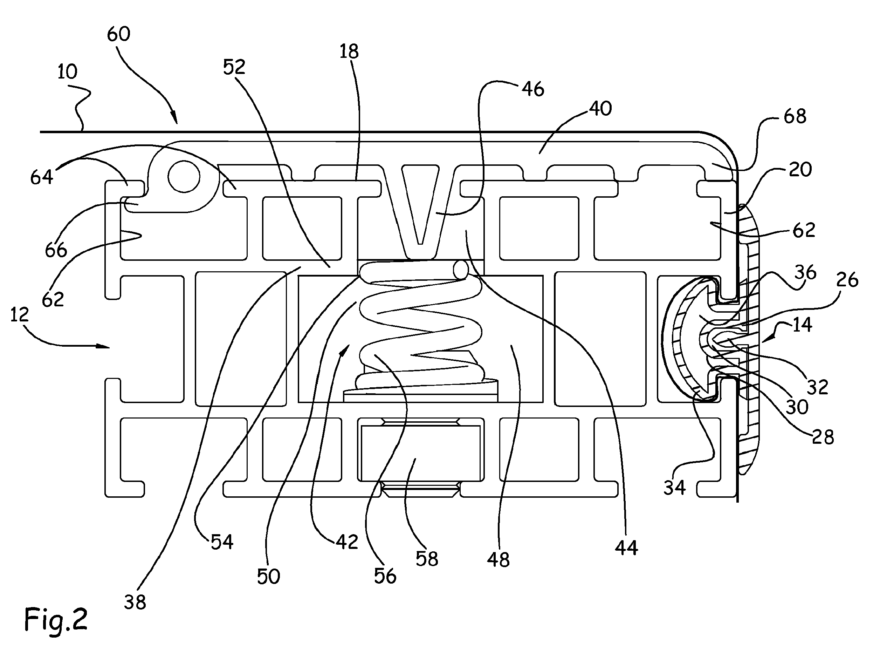

Le châssis 12 est constitué de tronçons rectilignes 16 susceptibles de former un cadre, lesdits tronçons étant réalisés à partir de profilés métalliques, notamment à base d'aluminium, comme illustré à titre d'exemple sur la figure 2. Selon une section transversale illustrée par les figures 2 à 4, le châssis comprend une face supérieure 18 , une face latérale extérieure 20 au niveau de laquelle débouche une rainure 22 via une ouverture 24 dont la largeur est inférieure à la largeur de la rainure.

Selon un mode de réalisation préféré, le châssis est réalisé à partir de profilés creux de section sensiblement carrée ou rectangulaire dont la face latérale extérieure comporte une ouverture 24 permettant de faire communiquer l'intérieur et l'extérieur du profilé.

Dans tous les cas, le châssis comprend un logement ou une rainure 22 avec une embouchure ou une ouverture 24 rétrécie.

De préférence, l'insert 14 est réalisé à partir d'un profilé ayant une section en forme de oméga, en matière plastique.

Selon un mode de réalisation décrit dans le brevet EP-1.809.913, l'insert 14 comprend un corps 26 en forme de fer à cheval, susceptible de se déformer de manière élastique et d'être inséré en force dans la rainure 22. Ce corps 26 comprend d'une part, une première paroi 28 délimitant un logement 30 débouchant vers l'extérieur, susceptible de recevoir un élément de maintien 32, et d'autre part, une seconde paroi 34 définissant une surface de retenue susceptible de coopérer avec la rainure 22, un évidement 36 étant ménagé entre les deux parois 28, 34 afin de rendre indépendantes les déformations de chacune desdites parois. Un élément de maintien 32 est introduit dans le logement 30 de manière à limiter le retrait de l'insert 14 de la rainure. Toutefois, l'invention n'est pas limitée à ce type de profilé ni à ce type d'insert. Dans tous les cas, le dispositif de fixation comprend un châssis avec des moyens de fixation de la toile.

Selon l'invention, le dispositif de fixation comprend des moyens pour tendre la toile et compenser une éventuelle déformation dimensionnelle de la toile 10. Ces moyens permettent notamment de s'affranchir de l'étirement de la toile au fil du temps et d'avoir une toile toujours tendue.

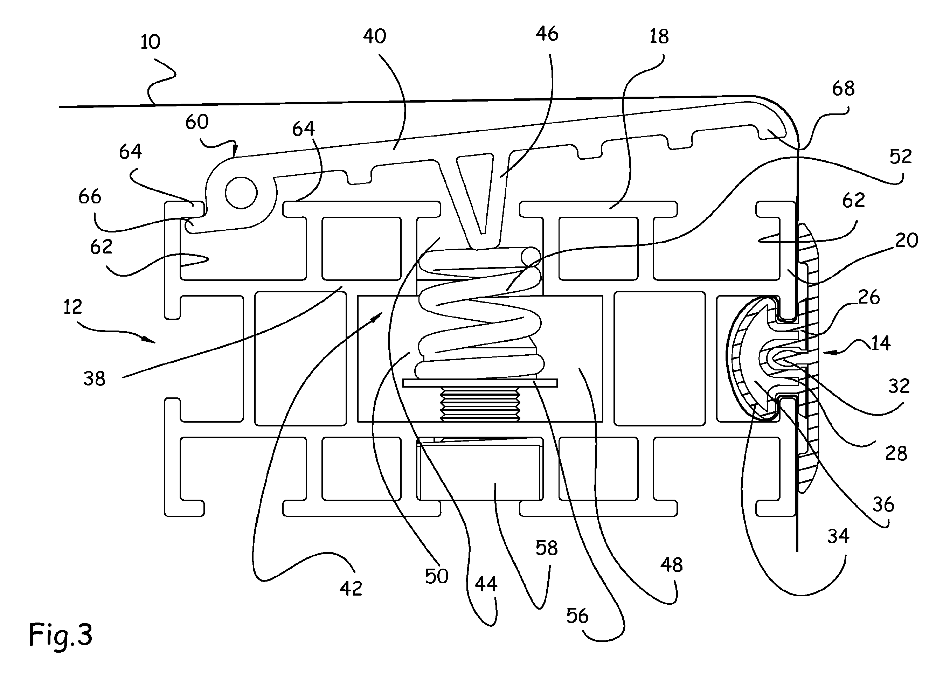

Les moyens pour tendre la toile comprennent une première partie 38 fixe par rapport aux moyens de fixation de la toile, appelée support, une seconde partie 40 mobile par rapport au support, appelée plaque, intercalée entre la toile et le support 38, ainsi que des moyens 42 de rappel qui tendent à écarter la plaque 40 du support 38 comme illustré sur la figure 3 afin de tendre la toile. De préférence, le même profilé comprend les moyens pour fixer la toile et les moyens pour tendre la toile.

Ainsi, le profilé utilisé pour former le châssis peut assurer la fonction de support 38 et comprendre au niveau de sa face latérale extérieure une rainure 22 apte à recevoir un insert 14, la plaque 40 étant prévue au niveau de sa face supérieure 18.

Ainsi, lors du montage, la toile est tendue grâce à l'insert 14, et exerce un effort sur la plaque 40 à l'encontre des moyens 42 de rappel qui tend à plaquer ladite plaque 40 contre le support 38. Lorsqu'au cours du temps la toile se déforme et se détend, l'effort exercé par la plaque sur la toile diminue si bien que les moyens de rappel 42 tendent à écarter la plaque 40 du support et à maintenir la toile tendue et compensent de manière automatique une éventuelle déformation de ladite toile.

Ainsi, il est possible d'utiliser des toiles qui à l'origine n'ont pas une résistance à l'allongement importante et qui sont généralement moins chères.

Selon un mode de réalisation, le support 38 comprend au niveau de sa face supérieure 18 une rainure centrale 44 et la plaque 40 comprend une nervure 46 en saillie apte à se loger dans la rainure centrale 44. En complément, le support 38 comprend une cavité 48 centrale dans laquelle est disposé au moins un ressort 50 de compression assurant la fonction de moyens rappel 42, la cavité 48 centrale et la rainure centrale 44 étant séparées par une paroi 52. Cette paroi 52 comprend au droit de chaque ressort 50 un orifice 54 pour permettre audit ressort 50 de sortir de la cavité 48 afin de prendre appui contre la nervure 46. Le support 38 peut comprendre plusieurs ressorts 50 sur sa longueur afin de répartir les efforts de rappel sur toute la longueur de la plaque 40.

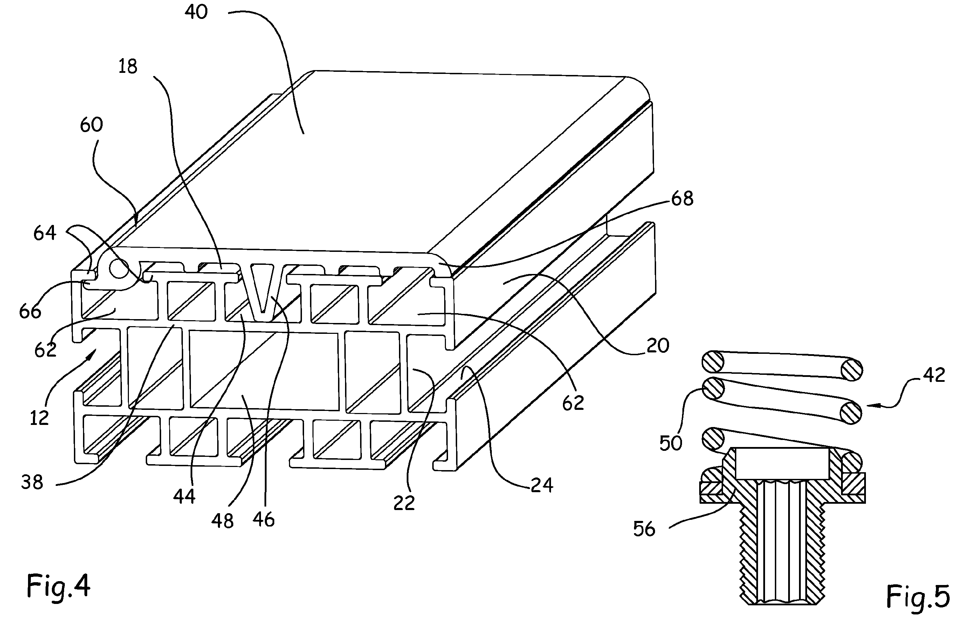

Avantageusement, des moyens sont prévus pour ajuster la raideur du ressort 50. Selon un mode de réalisation, illustré en détails sur la figure 5, les moyens pour ajuster la raideur du ressort comprennent une vis 56 apte à se visser sur le support ou un écrou 58 immobile par rapport au support selon l'axe de rotation de la vis, ladite vis comportant une tête avec un épaulement au niveau duquel peut prendre appui la première spire du ressort 50. Ainsi, en vissant plus ou moins la vis 56, il est possible d'ajuster la raideur du ressort 50.

Ainsi, sur la figure 2, le ressort est faiblement taré alors qu'il est fortement taré sur la figure 3.

De préférence, la plaque 40 peut pivoter par rapport à son bord longitudinal orienté vers l'intérieur du cadre (opposé à l'insert 14), le bord longitudinal opposé tendant à s'écarter du support sous l'action des moyens de rappel 42.

Selon un mode de réalisation, la plaque 40 comprend au niveau de son bord longitudinal 60 orienté vers l'intérieur du cadre une forme adaptée à une rainure 62 ménagée au niveau du support 38 de manière à obtenir une articulation de type charnière entre la plaque et le support.

Avantageusement, le support 38 comprend deux rainures 62 disposées de part et d'autre de la rainure centrale 44, chaque rainure 62 ayant une ouverture rétrécie par rapport au reste de la rainure avec de part et d'autre un bord recourbé 64.

Selon un mode de réalisation, la plaque 40 comprend au niveau du bord longitudinal 60 un rebord 66 décalé par rapport au reste de la plaque 60 de telle manière à ce que ledit rebord soit plaqué contre la face intérieure du bord recourbé 64 du support lorsque la plaque 40 est plaquée contre le support et soit retenu par ledit bord recourbé 64 du support lorsque les moyens de rappel 52 tendent à écarter la plaque 40 du support 38.

L'autre bord longitudinal 68 de la plaque orienté vers l'extérieur du cadre comprend un bord recourbé de manière à obtenir une surface courbe contre laquelle peut prendre appui la toile 10 sans risque d'être endommagée.

## Revendications

1. Dispositif de fixation d'une toile (10) tendue comprenant un châssis (12) avec des moyens (14) de fixation de la toile et des moyens pour compenser une éventuelle déformation dimensionnelle de ladite toile indépendants desdits moyens (14) de fixation de la toile, les moyens pour compenser comprenant une première partie (38) fixe par rapport auxdits moyens de fixation de la toile appelée support, **caractérisé en ce que** les moyens pour compenser comprennent une plaque (40) mobile par rapport audit support, distincte dudit support (38) et intercalée entre ladite toile (10) et ledit support (38), ainsi que des moyens (42) de rappel qui tendent à écarter la plaque (40) du support (38) de manière à tendre la toile (10).

2. Dispositif de fixation d'une toile (10) selon la revendication 1, **caractérisé en ce que** la plaque (40) est articulée par rapport à son support (38).

3. Dispositif de fixation d'une toile (10) selon la revendication 2, **caractérisé en ce que** la plaque (40) comprend une nervure (46) en saillie apte à se loger dans une rainure (44) ménagée au niveau d'une face du support (38).

4. Dispositif de fixation d'une toile (10) selon la revendication 2, **caractérisé en ce que** la plaque (40) comprend des moyens pour la faire pivoter par rapport au support (38).

5. Dispositif de fixation d'une toile (10) selon la revendication 3, **caractérisé en ce que** le support (38) comprend une rainure centrale (44) au niveau de sa face supérieure (18) et une cavité (48) centrale dans laquelle est disposé au moins un ressort (50) de compression assurant la fonction de moyens rappel (42), la cavité 48 centrale et la rainure centrale (44) étant séparées par une paroi (52) comportant au droit de chaque ressort (50) un orifice (54) pour permettre audit ressort (50) de sortir de la cavité (48) afin de prendre appui contre la plaque (40).

6. Dispositif de fixation d'une toile (10) selon la revendication 4, **caractérisé en ce que** la plaque (40) comprend des moyens pour la faire pivoter par rapport à son bord longitudinal orienté vers l'intérieur de la toile, le bord longitudinal opposé tendant à s'écarter du support sous l'action des moyens de rappel (42).

7. Dispositif de fixation d'une toile (10) selon la revendication 6, **caractérisé en ce que** la plaque (40) comprend au niveau de son bord longitudinal (60) orienté vers l'intérieur du cadre une forme adaptée à une rainure (62) ménagée au niveau du support (38) de manière à obtenir une articulation de type charnière entre la plaque et le support.

8. Dispositif de fixation d'une toile (10) selon la revendication 7, **caractérisé en ce que** la rainure (62) a une ouverture rétrécie avec de part et d'autre un bord recourbé (64) et **en ce que** la plaque (40) comprend au niveau du bord longitudinal (60) un rebord (66) décalé par rapport au reste de la plaque (60) de telle manière à ce que ledit rebord soit retenu par ledit bord recourbé (64) du support lorsque les moyens de rappel (52) tendent à écarter la plaque (40) du support (38).

9. Dispositif de fixation d'une toile (10) selon l'une quelconque des revendications précédentes, **caractérisé en ce que** le support (38) comprend au niveau de sa face latérale extérieure une rainure (22) apte à recevoir un insert (14) pour fixer la toile, la plaque (40) étant prévue au niveau de sa face supérieure (18).

10. Dispositif de fixation d'une toile (10) selon l'une quelconque des revendications précédentes, **caractérisé en ce qu'**il comprend des moyens pour ajuster la raideur des moyens de rappel (42).

11. Dispositif de fixation d'une toile (10) selon la revendication 10, **caractérisé en ce que** les moyens pour ajuster la raideur comprennent une vis (56) apte à se visser sur le support ou un écrou (58) immobile par rapport au support selon l'axe de rotation de la vis, ladite vis (56) comportant une tête avec un épaulement au niveau duquel peut prendre appui les moyens de rappel (42).

## Patentansprüche

1. Vorrichtung zur Befestigung einer gespannten Folie (10) mit einem Rahmen (12) mit Befestigungsmitteln (14) für die Folie und mit Mitteln, um eine eventuelle dreidimensionale Verformung dieser Folie auszugleichen, die unabhängig von diesen Befestigungsmitteln (14) der Folie sind. Die Mittel für den Ausgleich umfassen einen ersten, in Relation zu diesen Befestigungsmitteln der Folie festen Teil (38), genannt Träger. Dieser Träger ist **dadurch gekennzeichnet, dass** er über Mittel zum Ausgleich verfügt und eine gegenüber diesem Träger feste Platte (40) hat, die von diesem Träger (38) getrennt ist und die zwischen dieser Folie (10) und diesem Träger (38) eingebaut ist, so dass die Rückstellmittel, die die Platte (40) vom Träger (38) entfernen, die Folie (10) spannen.

2. Vorrichtung zur Befestigung einer Folie (10) nach Anspruch 1, **dadurch gekennzeichnet, dass** die Platte (40) an ihren Träger (38) angel enkt ist.

3. Vorrichtung zur Befestigung einer Folie (10) nach Anspruch 2, **dadurch gekennzeichnet, dass** die Platte (40) mit einer erhöhten Rippe (46) versehen ist, die sich in eine Nut (44) auf Höhe der Fläche des Trägers (38) einpassen kann.

4. Vorrichtung zur Befestigung einer Folie (10) nach Anspruch 2, **dadurch gekennzeichnet, dass** die Platte (40) Mittel zum Drehen der Platte relativ zum Träger (38) beinhaltet.

5. Vorrichtung zur Befestigung einer Folie (10) nach Anspruch 3, **dadurch gekennzeichnet, dass** der Träger (38) eine zentrale Nut (44) auf Höhe der oberen Seite (18) und einen zentralen Hohlraum (48) aufweist, in dem sich mindestens eine Druckfeder (50) befindet, die die Funktion der Rückstellmittel (42) gewährleistet. Der zentrale Hohlraum (48) und die zentrale Nut (44) sind durch eine Wand (52) getrennt, die an der rechten Seite jeder Feder (50) eine Öffnung (54) aufweiset, die dieser Feder (50) einen Austritt aus dem Hohlraum (48) ermöglicht, damit sich die Feder auf die Platte (40) stützen kann.

6. Vorrichtung zur Befestigung einer Folie (10) gemäß Anspruch 4, **dadurch gekennzeichnet, dass** die Platte (40) über Mittel verfügt, damit sie sich um ihre Längskante, die ins Innere der Folie gerichtet ist, dreht. Die entgegengesetzte Längskante entfernt sich unter Einwirkung der Rückstellmittel vom Träger (42).

7. Vorrichtung zur Befestigung einer Folie (10) gemäß Anspruch 6, **dadurch gekennzeichnet, dass** die Platte (40) an der Längskante (60), die ins Innere des Rahmens gerichtet ist, eine Form aufweist, die an eine Nut (62) angepasst ist, die am Träger (38) ausgespart ist, um ein Scharniergelenk zwischen der Platte und dem Träger zu erhalten.

8. Vorrichtung zur Befestigung einer Folie (10) gemäß Anspruch 7, **dadurch gekennzeichnet, dass** die Nut (62) eine verengte Öffnung aufweist, auf deren Seiten sich jeweils eine gebogene Kante (64) befindet, und dass die Platte (40) an der Längskante (60) mit einer im Verhältnis zu der restlichen Platte (60) versetzten Kante ausgestattet ist, so dass diese Kante von dieser gebogenen Kante (64) des Trägers zurückgehalten wird, wenn die Rückstellmittel (52) die Platte (40) vom Träger (38) entfernen.

9. Vorrichtung zur Befestigung einer Folie (10) nach einer der vorangehenden Ansprüche, **dadurch gekennzeichnet, dass** der Träger (38) auf der Seitenfläche eine Nut (22) aufweist, die einen Einsatz (14) aufnehmen kann, um die Folie zu spannen. Die Platte (40) ist auf der oberen Seite (18) vorgesehen.

10. Vorrichtung zur Befestigung einer Folie (10) nach einem der vorangehenden Ansprüche, **dadurch gekennzeichnet, dass** sie Mittel beinhaltet, die die Steifigkeit der Rückstellmittel (42) anpassen.

11. Vorrichtung zur Befestigung einer Folie (10) gemäß Anspruch 10, **dadurch gekennzeichnet, dass** die Mittel, die die Steifigkeit anpassen, über eine Schraube (56) verfügen, die auf den Träger oder eine relativ zum Träger gemäß der Drehachse der Schraube festen Mutter (58) geschraubt werden können. Diese Schraube (56) verfügt über einen Kopf mit Schulter, auf der sich die Rückstellmittel aufstützen können.

## Claims

1. Fixing system of a canvas (10) stretched by a chassis (12) with fixing devices (14) of the canvas in order to prevent a potential dimensional deformation of said sheet regardless from the said fixing devices (14) of the canvas. These devices include a first component which is set in connection with the fixing system of the canvas, it is the support. Its features are a mobile plaque (40) separate from the said support (38) and positioned between the canvas (10) and the said support (38) as well as biaising means (42) tending to bring the plaque (40) away from the support (38) in order to stretch the canvas (10).

2. Fixing system of the canvas (10) according to Claim 1 featuring the articulation of the plaque (40) on its support (38).

3. Fixing system of the canvas (10) according to Claim 2 featuring on the plaque (40) a protruding rib (46) able to fit in a groove (44) set in one face of the support (38).

4. Fixing system of the canvas (10) according to Claim 2 featuring a device enabling the plaque (40) to rotate on its support (38).

5. Fixing system of the canvas (10) according to Claim 3: the support (38) includes a central groove (44) at the level of its top face (18) and a central cavity (48) in which at least one compression spring (50) is set to ensure biaising means (42). The central cavity (48) and the central groove (44) are separated by a panel (52) including including in front of each spring (50) an opening to enable the said spring (50) to come out of the cavity (48) in order to be supported by the plaque (40).

6. Fixing system of the canvas (10) according to Claim 4: the plaque (40) has devices enabling it to rotate on its longitudinal edge directed towards the inside of the canvas, the opposite longitudinal edge tends to come away from the support under the effect of the biaising means (42).

7. Fixing system of the canvas (10) according to Claim 6: the plaque (40) includes at the level of its longitudinal edge (60) directed towards the inside of the frame a device adapted to a groove (62) set at the level of the support (38) to provide a joint hinge between the plaque and the support.

8. Fixing system of the canvas (10) according to Claim 7: the groove (62) has a narrowed opening in connection with a hooked edge (64) on both sides and the plaque (40) includes at the level of the longitudinal edge (60) a rim (66) which is staggered in connection with the rest of the plaque (60), the said rim is held against the inside face of the hooked edge of the support (64) when the plaque (40) is held against the support and is kept by the said hooked edge of the support (64) when the biaising means tend to bring the plaque (40) apart from the support (38).

9. Fixing system of the canvas (10) according to one of the previous claims: the support (38) includes at the level of its external lateral face a groove (22) able to receive an insert (14) to maintain the canvas in place, the plaque (40) being set at the level of its top face (18).

10. Fixing system of the canvas (10) according to one of the previous claims: it includes a device to adjust the stiffness of the biaising means (42).

11. Fixing system of the canvas (10) according to Claim 10: the device to adjust the stiffness includes a screw (56) which can be screwed on the support or a nut (58) motionless on the support according to the axe of rotation of the screw, the said screw has a head with a shoulder at the level of which can be supported the biaising means (42).
